# NOUVEAU FASCICULE DE BREVET EUROPEEN

(11) **EP 1 368 174 B2**
(45) Date de publication et mention de la décision concernant l'opposition: **23.03.2011**
(45) Mention de la délivrance du brevet: 17.01.2007
(21) Numéro de dépôt: 02714283.5
(22) Date de dépôt: 06.03.2002
(51) Int. Cl.: B29C 45/14

(54) **PROCEDE DE FABRICATION DE VITRAGES EN MATIERE PLASTIQUE**
VERFAHREN ZUR HERSTELLUNG VON VERGLASUNGEN AUS KUNSTSTOFF
METHOD FOR PRODUCING PLASTIC GLAZING

(30) Priorité: 09.03.2001 FR 0103810
(43) Date de publication de la demande: 10.12.2003
(73) Titulaire: SAINT-GOBAIN GLASS FRANCE, 92400 Courbevoie (FR)
(72) Inventeur: BENYAHIA, Rym, F-93000 Bobigny (FR); LEFEVRE, Pascal, F-02300 Manicamp (FR)
(74) Mandataire: Bockhorni & Kollegen
(86) Numéro de dépôt international: PCT/FR2002/000802
(87) Numéro de publication internationale: WO 2002/072330

(56) Documents cités:
- EP-A- 0 443 727
- EP-A- 0 534 185
- WO-A-99/03678
- WO-A-99/65678
- DE-T2- 69 323 772
- PATENT ABSTRACTS OF JAPAN vol. 10, no. 249 (M-511), 27 août 1986 (1986-08-27) & JP 61 079612 A (C UYEMURA & CO LTD), 23 avril 1986 (1986-04-23)
- G.KAUFMANN - G.BAGUSCHE: 'Kunststoffe 84', 1994, CARLL HANSER VERLAG, MÜNCHEN article 'Werkzeug und Heisskanal in der Hinterspritztechnik', pages 239 - 242
- 'Diplomarbeit', 1996, BERGISCHE UNIVERSITÄT, WUPPERTAL article D. FINKENSIEPER: 'Beeinflussung der Formteilqualität beim Hinterspritzen von Folien'
- & ZÖLLNER OLAF: 'Optimierte Werkzeugtemperierung' ANWENDUGNSTECHNISCHE INFORMATION vol. 1104, 1997, LEVERKUSEN,

## Description

La présente invention a trait à la fabrication de produits en matière plastique, essentiellement à deux dimensions, sensiblement plats ou de formes plus ou moins complexes et au moins en partie transparents, qui sont adaptés par leur haute qualité optique à une application en tant que vitrages.

Bien que le verre soit difficilement remplaçable dans la plupart de ses applications dans des vitrages pour le bâtiment, le mobilier, l'électroménager (porte de four...), le mobilier urbain ou les véhicules de transport, son remplacement, principalement par des matières plastiques transparentes, a été envisagé dans quelques unes de ces applications.

L'intérêt de telles matières plastiques du type du polycarbonate par rapport au verre réside notamment dans la possibilité de réaliser des produits de formes plus variées et complexes, s'écartant plus de la géométrie plane, et d'intégrer au produit un plus grand nombre de fonctionnalités. Cette possibilité est inhérente, notamment, au procédé de moulage par injection.

Il convient bien entendu de veiller à préserver la qualité optique du vitrage et les propriétés mécaniques requises. A cet égard, les matières plastiques se différencient du verre par une rayabilité supérieure imposant l'emploi d'un revêtement anti-rayures et par une rigidité moindre ; cette dernière caractéristique nécessite de rigidifier le vitrage par la formation de surépaisseurs, ou l'utilisation d'inserts métalliques ou équivalents, mais autorise à l'inverse des modes de montage simplifiés, notamment dans le cas d'un montage dans une baie de carrosserie, par le fait que le vitrage peut être déformé, ou qu'il peut être aisément équipé d'inserts périphériques pour le montage, sous forme de pattes métalliques ou autres.

Dans le cadre de cette invention, l'on se réfère particulièrement à des vitrages en matière plastique obtenus par une succession d'opérations consistant à :
- former sur un film de polycarbonate ou similaire sensiblement plan un revêtement anti-rayures éventuellement dans un état de durcissement intermédiaire,
- thermoformer ce film en continuant éventuellement à durcir le revêtement anti-rayures,
- placer ce film au fond d'un moule de sorte que le revêtement anti-rayures soit en contact avec la paroi du moule, et
- associer au film la matière constituant l'âme du vitrage par injection, pressage à chaud...

Alternativement, le film de polycarbonate est muni d'un revêtement anti-rayures après avoir été mis en forme.

Cette technologie est représentée par les documents WO 99/03678 et WO 99/65678, ce dernier ayant trait par ailleurs à l'injection d'une matière supplémentaire, de nature chimique et de propriétés différentes, au moyen d'un moule unique perfectionné, permettant de mettre en oeuvre une bi- ou multi-injection. Cette matière supplémentaire constitue par exemple un joint périphérique élastomère, une embase de rétroviseur...

Lorsque, dans le cadre de cette technique, il est procédé à l'injection thermoplastique par exemple de polycarbonate, il est nécessaire de chauffer la paroi du moule par circulation d'eau sous pression à une température allant de 90 à 120°C, car le refroidissement brutal de la matière injectée à 300°C au contact de la paroi du moule à une température plus basse aurait pour effet de créer des irrégularités dans la matière injectée, affectant immanquablement la qualité optique du produit.

On s'est aperçu, de manière inattendue, que dans la mise en oeuvre de l'enseignement des documents WO 99/03678 et WO 99/65678 précités, le fait de placer le film thermoformé au fond du moule, dans les parties pour lesquelles la transparence et la haute qualité optique d'un vitrage sont requises, permettait d'abaisser sensiblement la température de paroi du moule, tout en préservant la meilleure qualité optique, à condition que le film soit isolant thermique. En diminuant ainsi la température du moule de 120°C à 60°C par exemple dans le cas d'une injection de polycarbonate, on diminue l'apport de chaleur par circulation de fluide (eau, huile...) chaud et on réalise une économie d'énergie.

L'invention a donc pour objet un procédé de fabrication selon la revendication 1 d'un produit au moins en partie transparent et de qualité optique élevée comparable à celle d'un vitrage, dans lequel on place dans une partie au moins du fond d'un moule une feuille de forme correspondante et isolante thermique, puis on injecte dans ce moule un matériau thermoplastique apte à se solidariser à ladite feuille dans ledit produit, procédé qui se distingue par le fait que la partie du moule dont le fond est pourvu de ladite feuille est maintenue à une température inférieure à celle qui serait nécessaire en l'absence de ladite feuille pour procurer la qualité optique requise.

Au sens de l'invention, on entend en général, par le fait de placer en fond de moule une feuille de forme correspondante, le positionnement d'une feuille préalablement de manière à épouser le fond du moule, cette feuille pouvant supporter, à sa surface de contact avec le moule, un revêtement anti-rayures dans un état de durcissement intermédiaire ou complet. D'autre part, le polycarbonate fréquemment utilisé pour constituer cette feuille, de même que de nombreux polymères équivalents, sont isolants thermiques de manière bien connue des spécialistes du domaine.

Une ou plusieurs feuilles sont susceptibles d'être positionnées en fond de moule ; selon deux modes de réalisation fréquents, on place une feuille en fond de partie mobile du moule, et le cas échéant une en fond de partie fixe.

Des produits d'excellente qualité optique sont obtenus, avec une diminution substantielle de l'apport calorifique aux parois de moule. D'autre part, il est plus aisé d'appliquer la feuille sur le fond du moule plus froid.

Un avantage supplémentaire est procuré par l'invention lorsque l'adhésion de la feuille au fond du moule est obtenue, avant l'opération d'injection elle-même, par des moyens électrostatiques : cette adhésion est alors en effet accrue.

Ladite feuille a avantageusement une épaisseur d'au moins 100 µm, de préférence au moins 200 µm et de manière particulièrement préférée au moins 250 µm. Ces valeurs ne sont pas impératives mais garantissent que les effets remarquables susmentionnés de l'invention soient obtenus à un degré élevé.

L'épaisseur de la feuille est, selon une autre caractéristique, d'au plus 1000 µm, de préférence au plus 850 µm et de manière particulièrement préférée au plus 750 µm, ces épaisseurs étant suffisantes pour permettre l'incorporation de toutes les fonctionnalités désirées qui seront décrites dans la suite, tout en autorisant une manipulation et un thermoformage de la feuille aisés.

La feuille est de préférence monolithique ou multicouche et comprend un ou plusieurs des polymères choisis parmi les polycarbonate, polypropylène, poly(méthacrylate de méthyle), copolymère éthylène/acétate de vinyle, poly(téréphtalate d'éthylèneglycol), poly(téréphtalate de butylèneglycol), polyuréthane, polyvinylbutyral, copolymère cyclooléfinique tel qu'éthylène/norbornène ou éthylène/cyclopentadiène, copolymère polycarbonate/polyester, résine ionomère telle que copolymère éthylène/acide (méth)acrylique neutralisé par une polyamine et similaires, seuls ou en mélanges.

Le matériau thermoplastique injecté est identique ou différent de celui constituant la couche de la feuille thermoformable avec laquelle il entre en contact.

D'autre part, une qualité optique du produit remarquable est favorisée par le fait que, dans le procédé de l'invention, la feuille est thermoformée au préalable le cas échéant - lorsque le fond de moule n'est pas de forme sensiblement plane -, puis maintenue en fond de moule par tout moyen approprié, notamment par aspiration et/ou soufflage et/ou de préférence par effet électrostatique, avant l'injection du matériau thermoplastique. Cette dernière mesure vise à établir un contact étroit de la feuille et du fond de moule, exempt de plis ; un tel contact est d'autant mieux obtenu, dans le cas de la mise en oeuvre de l'effet électrostatique, que celui-ci est plus efficace lorsque la température du fond de moule est abaissée conformément à l'invention, comme mentionné précédemment.

Un produit au moins en partie transparent et de qualité optique élevée comparable à celle d'un vitrage peut être obtenu par le procédé décrit ci-dessus, dans lequel ledit matériau thermoplastique est injecté, dans la partie transparente dudit produit, en une épaisseur comprise entre 1 et 10 mm. Ces valeurs sont compatibles avec l'obtention de propriétés mécaniques, en particulier d'une rigidité, suffisantes et d'un gain de masse surfacique par rapport au verre.

Selon d'autres caractéristiques du produit d'un grand intérêt pratique :
- ledit matériau thermoplastique est injecté en surépaisseur rigidifiante à la périphérie du produit et/ou en formant des excroissances telles que des pattes pour le positionnement ou la fixation du produit et/ou avec insertion d'éléments notamment métalliques, y compris pour une connexion électrique ;
- ladite feuille supporte une couche anti-rayures ;
- ladite feuille comprend la fonction hydrophobe/oléophobe incorporée dans la couche anti-rayures, ou greffée sur celle-ci ou recouvrant celle-ci avec interposition d'un film plastique support de la couche hydrophobe/oléophobe ;
- ladite feuille comprend, sur tout ou partie de sa surface, une couche de décor et/ou de masquage, positionnée de préférence directement sous la couche constitutive de ladite feuille supportant ladite couche anti-rayures ;
- ladite feuille comprend une ou plusieurs couches optiquement sélectives ;
- ladite feuille comprend une couche à gradient de composition ou un empilement de couches antireflet ;
- ladite feuille comprend une couche ou un réseau de fils conducteur d'électricité, susceptible d'assumer la fonction de désembuage/dégivrage en chauffant, ou la fonction d'antenne.

La particularité de l'invention, consistant à abaisser la température du moule, n'induit aucun aménagement particulier pour l'obtention de ces caractéristiques, qui est par ailleurs décrite dans de nombreux documents, parmi lesquels les deux demandes susmentionnées, et par conséquent, connue des spécialistes du domaine et aisément à leur portée.

Le procédé de la présente invention peut être utilisé de diverses façons :
- vitrage pour le bâtiment, le mobilier (vitrine, tablette, cabine de douche...), l'électroménager, le mobilier urbain (Abribus, panneau publicitaire...), les véhicules de transport terrestre, maritime et aérien ;
- un vitrage pour véhicule automobile notamment un pare-brise ou, de préférence, un vitrage latéral ou une lunette arrière, un toit ouvrant et/ou panoramique.

L'invention est illustrée par l'exemple qui suit.

### EXEMPLE

Sur un film de 80 µm d'épaisseur de polycarbonate standard préparé à partir de Bisphénol A, commercialisé par la Société GENERAL ELECTRIC sous la marque enregistrée « Makrolon » et dont la température de transition vitreuse Tg est égale à 145°C, on dépose par flow coating le revêtement anti-rayures décrit dans l'exemple de la demande de brevet EP-A1-0 718 348 en un film liquide de 20 µm d'épaisseur. Après séchage, cette épaisseur est réduite à 5 µm.

Le film support revêtu est alors placé au fond d'un moule, la couche anti-rayures étant positionnée au-dessus ; l'ensemble est soumis à un traitement thermique à 155°C pendant 30 min. Une feuille thermoformée est ainsi constituée.

Elle est ensuite placée au fond d'un moule d'injection, la couche anti-rayures étant mise en contact avec la paroi du moule chauffée au moyen d'une circulation d'eau à 60°C. On procède alors à l'injection thermoplastique d'une couche de 5 mm d'épaisseur du même polycarbonate standard que celui constituant le film support de la couche anti-rayures.

Le stratifié obtenu présente une transparence, une qualité optique excellentes.

Cette injection réalisée en l'absence de la feuille thermoformée, toutes autres conditions opératoires étant identiques, ne permet d'obtenir qu'un produit dont la surface présente des irrégularités et une qualité optique médiocre, dont témoigne une perte de transparence et une distorsion ou diffusion de la lumière.

## Revendications

1. Procédé de fabrication d'un produit au moins en partie transparent et de qualité optique élevée comparable à celle d'un vitrage, dans lequel on place dans une partie au moins du fond d'un moule une feuille de forme correspondante et isolante thermique, puis on injecte dans ce moule un matériau thermoplastique apte à se solidariser à ladite feuille dans ledit produit, **caractérisé en ce que** la partie du moule dont le fond est pourvu de ladite feuille est maintenue à une température inférieure à celle qui serait nécessaire en l'absence de ladite feuille pour procurer la qualité optique requise et que ledit matériau thermoplastique injecté est polycarbonate et **en ce que** la partie du moule dont le fond est pourvu de ladite feuille est maintenue à une température de 60°C.

2. Procédé selon la revendication 1, **caractérisé en ce que** ladite feuille a une épaisseur d'au moins 100 µm, de préférence au moins 200 µm et de manière particulièrement préférée au moins 250 µm.

3. Procédé selon la revendication 1 ou 2, **caractérisé en ce que** ladite feuille a une épaisseur d'au plus 1000 µm, de préférence au plus 850 µm et de manière particulièrement préférée au plus 750 µm.

4. Procédé selon l'une des revendications précédentes, **caractérisé en ce que** ladite feuille est monolithique ou multicouche et comprend un ou plusieurs des polymères choisis parmi les polycarbonate, polypropylène, poly (méthacrylate de méthyle), copolymère éthylène/acétate de vinyle, poly (téréphtalate d'éthylèneglycol), poly (téréphtalate de butylèneglycol), polyuréthane, polyvinylbutyral, copolymère cyclooléfinique tel qu'éthylène/norbornène ou éthylène/cyclopentadiène, copolymère polycarbonate/polyester, résine ionomère telle que copolymère éthylène/acide (méth)acrylique neutralisé par une polyamine et similaires, seuls ou en mélange.

5. Procédé selon l'une des revendications précédentes, **caractérisé en ce que** ladite feuille, ayant été thermoformée au préalable le cas échéant, est maintenue en fond de moule par tout moyen approprié, notamment par aspiration et/ou soufflage et/ou de préférence par effet électrostatique, avant l'injection dudit matériau thermoplastique.

6. Procédé selon l'une des revendications précédentes, **caractérisé en ce que** ledit matériau thermoplastique est injecté, dans la partie transparente dudit produit, en une épaisseur comprise entre 1 et 10 mm.

7. Procédé selon la revendication 6, **caractérisé en ce que** ledit matériau thermoplastique est injecté en surépaisseur rigidifiante à la périphérie dudit produit et/ou en formant des excroissances telles que des pattes pour le positionnement ou la fixation dudit produit et/ou avec insertion d'éléments notamment métalliques, y compris pour une connexion électrique.

8. Procédé selon la revendication 6 ou 7, **caractérisé en ce que** ladite feuille supporte une couche anti-rayures.

9. Procédé selon la revendication 8, **caractérisé en ce que** ladite feuille comprend la fonction hydrophobe/oléophobe incorporée dans la couche anti-rayures, ou greffée sur celle-ci ou recouvrant celle-ci avec interposition d'un film plastique support de la couche hydrophobe/oléophobe.

10. Procédé selon la revendication 8, **caractérisé en ce que** ladite feuille comprend, sur tout ou partie de sa surface, une couche de décor et/ou de masquage, positionnée de préférence directement sous la couche constitutive de ladite feuille supportant ladite couche anti-rayures.

11. Procédé selon l'une des revendications 6 à 10, **caractérisé en ce que** ladite feuille comprend une ou plusieurs couches optiquement sélectives.

12. Procédé selon l'une des revendications 6 à 11, **caractérisé en ce que** ladite feuille comprend une couche à gradient de composition ou un empilement de couches antireflet.

13. Procédé selon l'une des revendications 6 à 12, **caractérisé en ce que** ladite feuille comprend un réseau conducteur d'électricité.

## Claims

1. Method of manufacturing a product which is at least partly transparent and of high optical quality comparable to that of glazing, in which a sheet is placed in at least part of the bottom of a mould, the sheet being of corresponding shape and thermally insulating, then a thermoplastic capable of being secured to the said sheet in the said product is injected into this mould, **characterized in that** the part of the mould whose bottom is provided with the said sheet is kept at a temperature less than that which would be necessary in the absence of the said sheet in order to give the required optical quality and that said injection moulded thermoplastic is polycarbonate, and **in that** the part of the mould whose bottom is provided with the said sheet is kept at a temperature of 60°C.

2. Method according to Claim 1, **characterized in that** the said sheet has a thickness of at least 100 µm, preferably at least 200 µm and, in a particularly preferred manner, at least 250 µm.

3. Method according to Claim 1 or 2, **characterized in that** the said sheet has a thickness of at the most 1000 µm, preferably at the most 850 µm and, in a particularly preferred manner, at the most 750 µm.

4. Method according to one of the preceding claims, **characterized in that** the said sheet is monolithic or multilayer and comprises one or more of the polymers chosen from polycarbonate, polypropylene, polymethyl methacrylate, ethylene/vinyl acetate copolymer, polyethylene glycol terephthalate, polybutylene glycol terephthalate, polyurethane, polyvinyl butyral, cycloolefin copolymers of the ethylene/norbornene or ethylene/cyclopentadiene type, polycarbonate/polyester copolymer, ionomeric resin such as ethylene/(meth)acrylic acid copolymer neutralized by a polyamine, and the like, alone or as a blend.

5. Method according to one of the preceding claims, **characterized in that** the said sheet, having been thermoformed in advance as required, is kept at the bottom of the mould by any suitable means, especially by suction and/or blowing means and/or preferably by the electrostatic effect, before injecting the said thermoplastic.

6. Method according to any one of the preceding claims, **characterized in that** the said thermoplastic is injection moulded, in the transparent part of the said product, with a thickness of between 1 and 10 mm.

7. Method according to Claim 6, **characterized in that** the said thermoplastic is injected with an overthickness stiffening the periphery of the said product and/or thereby forming protrusions such as lugs for positioning or fastening the said product and/or with elements, especially metallic elements, being inserted, for an electrical connection.

8. Method according to Claim 6 or 7, **characterized in that** the said sheet supports a scratch-resistant layer.

9. Method according to Claim 8, **characterized in that** the said sheet comprises a hydrophobic/ oleophobic function incorporated in the scratch-resistant layer, or grafted thereonto or covering the latter with the insertion of a plastic film supporting the hydrophobic/oleophobic layer.

10. Method according to Claim 8, **characterized in that** the said sheet comprises, over all or some of its surface, a decorative and/or masking layer, preferably positioned directly under the layer constituting the said sheet supporting the said scratch-resistant layer.

11. Method according to one of Claims 6 to 10, **characterized in that** the said sheet comprises one or more optically selective layers.

12. Method according to one of Claims 6 to 11, **characterized in that** the said sheet comprises a compositional layer with a gradient or a stack of antireflection layers.

13. Method according to one of Claims 6 to 12, **characterized in that** the said sheet comprises an electrically conducting network.

## Patentansprüche

1. Verfahren zur Herstellung eines wenigstens teilweise transparenten Erzeugnisses mit einer hohen optischen Qualität, die vergleichbar mit derjenigen einer Glasscheibe ist, in welchem wenigstens in einem Teil des Bodens einer Form eine wärmedämmende Folie mit entsprechender Gestalt angeordnet und anschließend in die Form ein thermoplastisches Material spritzgegossen wird, das in der Lage ist, sich mit der Folie zu dem Erzeugnis fest zu verbinden, **dadurch gekennzeichnet, dass** der Teil der Form, dessen Boden mit dieser Folie versehen ist, auf einer Temperatur gehalten wird, die niedriger als diejenige ist, die ohne diese Folie erforderlich wäre, um die erforderliche optische Qualität sicherzustellen, dass das spritzgegossene thermoplastische Material aus Polycarbonat ist, und dass der Teil der Form, dessen Boden mit der Folie versehen ist, auf einer Temperatur von 60 °C gehalten wird.

2. Verfahren nach Anspruch 1, **dadurch gekennzeichnet, dass** die Dicke der Folie mindestens 100 µm, vorzugsweise mindestens 200 µm, und besonders bevorzugt mindestens 250 µm beträgt.

3. Verfahren nach Anspruch 1 oder 2, **dadurch gekennzeichnet, dass** die Dicke der Folie höchstens 1 000 µm, vorzugsweise höchstens 850 µm, und besonders bevorzugt höchstens 750 µm beträgt.

4. Verfahren nach einem der vorhergehenden Ansprüche, **dadurch gekennzeichnet, dass** die Folie monolithisch oder mehrschichtig ist und ein oder mehrere Polymere umfasst, die aus Polycarbonat, Polypropylen, Polymethylmethacrylat, Ethylen/Vinylacetat-Copolymer, Polyethylenglykolterephthalat, Polybutylenglykolterephthalat, Polyurethan, Polyvinylbutyral, cycloolefinischem Copolymer wie Ethylen/Norbornen oder Ethylen/Cyclopentadien, Polycarbonat/Polyester-Copolymer, Ionomerharz wie einem Copolymer aus Ethylen/mit einem Polyamin neutralisierter (Meth-)Acrylsäure und dergleichen allein oder im Gemisch ausgewählt sind.

5. Verfahren nach einem der vorhergehenden Ansprüche, **dadurch gekennzeichnet, dass** die Folie, die gegebenenfalls zuvor thermisch verformt worden ist, auf dem Boden der Form durch ein beliebiges geeignetes Mittel, insbesondere durch Ansaugen und/oder Blasen und/oder vorzugsweise durch den elektrostatischen Effekt vor dem Einspritzen des thermoplastischen Materials gehalten wird.

6. Verfahren nach einem der vorhergehenden Ansprüche, **dadurch gekennzeichnet, dass** das thermoplastische Material in dem transparenten Teil des Erzeugnisses mit einer Dicke von 1 bis 10 mm spritzgegossen worden ist.

7. Verfahren nach Anspruch 6, **dadurch gekennzeichnet, dass** das thermoplastische Material zu einer versteifenden Überdicke auf dem Umfang des Erzeugnisses und/oder zur Bildung von Vorsprüngen wie Klammern für die Positionierung oder Befestigung des Erzeugnisses und/oder mit Einfügung insbesondere metallischer Elemente, dabei solche für einen elektrischen Anschluss eingeschlossen, spritzgegossen worden ist.

8. Verfahren nach Anspruch 6 oder 7, **dadurch gekennzeichnet, dass** die Folie eine kratzfeste Schicht trägt.

9. Verfahren nach Anspruch 8, **dadurch gekennzeichnet, dass** die Folie eine hydrophobe/oleophobe Funktion umfasst, die in die kratzfeste Schicht eingebaut ist oder auf diese gepfropft ist oder diese mit Zwischenlage einer Kunststofffolie, welche die hydrophobe/oleophobe Schicht trägt, bedeckt.

10. Verfahren nach Anspruch 8, **dadurch gekennzeichnet, dass** die Folie auf ihrer gesamten Oberfläche oder einem Teil davon eine verschönernde und/oder abdeckende Schicht umfasst, die vorzugsweise direkt unter der konstituierenden Schicht der Folie angeordnet ist, welche die kratzfeste Schicht trägt.

11. Verfahren nach einem der Ansprüche 6 bis 10, **dadurch gekennzeichnet, dass** die Folie eine oder mehrere optisch selektive Schichten umfasst.

12. Verfahren nach einem der Ansprüche 6 bis 11, **dadurch gekennzeichnet, dass** die Folie eine Schicht mit einem Zusammensetzungsgradienten oder einen Antireflex-Schichtaufbau umfasst.

13. Verfahren nach einem der Ansprüche 6 bis 12, **dadurch gekennzeichnet, dass** die Folie ein elektrisch leitfähiges Netz umfasst.
